Europäisches Patentamt

European Patent Office

Office européen des brevets

(11) Veröffentlichungsnummer: **0 513 561 A1**

## (12) EUROPÄISCHE PATENTANMELDUNG

(21) Anmeldenummer: **92106793.0**

(22) Anmeldetag: **21.04.92**

(51) Int. Cl.5: **B65G 39/09**, F16C 29/00, B60B 33/08

(30) Priorität: **14.05.91 DE 4115707**

(43) Veröffentlichungstag der Anmeldung:
**19.11.92 Patentblatt 92/47**

(84) Benannte Vertragsstaaten:
**DE FR GB IT**

(71) Anmelder: **ELECTRO PNEUMATIC INTERNATIONAL GMBH**
**Obere Tiefenbachstrasse 8**
**W-8164 Hausham(DE)**

(72) Erfinder: **Sundseth, Jarl**
**Rothendaschweg 12a**
**W-8104 Neuhaus (Schliersee)(DE)**

(74) Vertreter: **Bohnenberger, Johannes, Dr. et al**
**Meissner, Bolte & Partner**
**Widenmayerstrasse 48**
**W-8000 München 22(DE)**

(54) **Förderkugeleinheit.**

(57) Es sind Fördereinrichtungen bekannt, die eine Transportkugel (21) umfassen, die über Lagerkugeln (22) in einer Lagerschale (23) gelagert ist. Ein Haltering (24) ist zum Halten der Transportkugel (21) auf den Lagerkugeln (22) in der Lagerschale (23) vorgesehen. Die Lagerschale (23) ist in eine Ausnehmung einer Haltefläche (10) einsetzbar und auf dieser mittels eines Schalenrandes (33) abstützbar. Es wird vorgeschlagen, an der Lagerschale (23) mindestens einen elastisch verformbaren Vorsprung zur Bildung von erstes Sicherungseinrichtungen (35) vorzusehen, der gleichzeitig eine radiale Ausnehmung im Inneren der Lagerschale (23) bildet, in welche ein Haltevorsprung (26) des Halteringes (24) zu dessen Fixierung im Inneren der Lagerschale (23) einsetzbar ist.

FIG.8

EP 0 513 561 A1

Die Erfindung betrifft eine Fördereinrichtung mit einer Transportkugel, die über Lagerkugeln in einer Lagerschale gelagert ist nach dem Oberbegriff des Patentanspruches 1.

Derartige Fördereinrichtungen werden zum Bewegen von Containern oder dergleichen Frachtstücken in Flugzeug-Laderäumen von Frachtflugzeugen vielfach verwendet. Bereits aus dem Anwendungszweck geht hervor, daß derartige Einrichtungen leicht und dennoch sehr robust sein müssen. Weiterhin kommt es darauf an, daß die Fördereinrichtungen einfach und damit kostengünstig aufgebaut sind und darüber hinaus beim Einbau und auch beim Ersatz keinen erheblichen Arbeitsaufwand mit sich bringen.

Aus der US 1,963,956 ist eine Fördereinrichtung bekannt, die auf eine Unterlage aufschraubbar ist. Die Befestigung ist somit aufwendig.

Aus der DE-PS 249 648 ist eine Fördereinrichtung bekannt, die einen Gußkörper umfaßt und somit sehr schwer ist.

Aus der DE 35 07 945 C1 ist eine Fördereinrichtung bekannt, bei welcher die Lagerschale am Haltering befestigt und der Haltering in einer weiteren ringförmigen Haltevorrichtung befestigt ist. Die ganze Einheit wird dann in die Ausnehmung der Haltefläche eingesetzt. Auch diese Fördereinrichtung ist aufwendig ausgebildet.

Aus der DE 35 41 020 ist eine Fördereinrichtung bekannt, bei welcher die Lagerschale in einem Gehäuse gehalten ist. Das Gehäuse weist hakenförmige Elemente auf, um die Fördereinrichtung in einer Haltefläche festzusetzen. Auch diese Fördereinrichtung ist aufwendig ausgebildet.

Aus der DE 89 15 491 U1 ist eine Fördereinrichtung bekannt, bei welcher der Haltering mittels Zähnen in der Lagerschale befestigt wird. Die Lagerschale weist einen Riegel auf, der zumindest zum Herausnehmen der Fördereinrichtung aus der Ausnehmung der Haltefläche betätigt werden muß. Die Anordnung ist somit im Aufbau sowie in der Handhabung relativ kompliziert.

Aus der DE 39 27 560 A1 ist eine Fördereinrichtung der eingangs genannten Art bekannt. Bei dieser Fördereinrichtung weist der Haltering elastische, einstückig angeformte Riegel auf, die zum einen zum Halten des Halterings in der Lagerschale, zum anderen zum Halten der gesamten Fördereinrichtung in der Kaltefläche dienen. Das Ausbauen dieser Fördereinrichtung aus der Haltefläche ist relativ kompliziert und erfordert einige Geschicklichkeit. Darüber hinaus ist der Haltering in der Lagerschale relativ elastisch gehalten, so daß die Transportkugel im Betriebe nicht unerhebliche Relativbewegungen gegenüber der Lagerschale ausführen kann, was die Haltbarkeit der Anordnung beeinträchtigt. Schließlich ist die bekannte Fördereinrichtung relativ kompliziert geformt.

Der Erfindung liegt die Aufgabe zugrunde, eine Fördereinrichtung der eingangs genannten Art dahingehend weiterzubilden, daß bei einfachem Aufbau eine erhöhte Haltbarkeit bei gleichzeitig vereinfachten Ein- und Ausbau gewährleistet ist.

Diese Aufgabe wird dadurch gelöst, daß die Lagerschale mindestens einen elastisch verformbaren Vorsprung zur Bildung der ersten Halteeinrichtungen umfaßt, der gleichzeitig eine Ausnehmung im Inneren der Lagerschale bildet, in welchen ein Haltevorsprung des Halterings zu dessen Fixierung im Inneren der Lagerschale einsetzbar ist.

Ein wesentlicher Punkt der Erfindung liegt somit darin, daß die Lagerschale zwischen der Haltefläche und den Stellen des Halterings liegt, an welchen dieser in der Lagerschale festgehalten ist. Dadurch ist gewährleistet, daß dann, wenn die Fördereinrichtung in der Haltefläche sitzt, die Haltefläche selbst als Gegenlager entgegen einer Bewegung des Halterings zur Lagerschale wirkt.

Alternativ wird die Aufgabe derart gelöst, daß die Lagerschale eine Öffnung aufweist, in welche ein Verschlußstück derart einsetzbar ist, daß es mit seinem einen Ende über die Außenfläche der Lagerschale zur Bildung der ersten Halteeinrichtungen hervorsteht und mit seinem anderen Ende in einer Ausnehmung in dem Haltering zu dessen Fixierung im Inneren der Lagerschale ragt. Durch diese Ausbildung werden die gleichen Vorteile erzielt, wie oben beschrieben.

Vorzugsweise sind die ersten Halteeinrichtungen in beiden Fällen derart geformt, daß die Lagerschale kraftschlüssig, ohne gesonderte Bewegung eines Riegels oder dergleichen in die Ausnehmung einschnappbar und unter Lösen des Schnappsitzes herausnehmbar ist. Es entfällt also die gesonderte, "Fingerspitzengefühl" erfordernde Betätigung einer gesonderten Riegeleinrichtung.

Vorzugsweise sind den ersten Halteeinrichtungen, im wesentlichen diametral (zur Transportkugel) gegenüberliegend unelastisch ausgebildete zweite Halteeinrichtungen an der Lagerschale angeordnet. Dadurch ist ein sicherer Sitz bei geringem Aufwand und hoher Haltbarkeit gewährleistet.

Vorzugsweise ist neben der ersten Halteeinrichtung eine Öffnung im Umfangsflansch ausgebildet, in welche ein Werkzeug z. B. die Klinge eines Schraubenziehers zum Heraushebeln der Lagerschale aus der Ausnehmung der Haltefläche einführbar ist. Ein derartiges Werkzeug ist immer zur Hand, so daß der Ausbau sehr einfach ist. Bei dieser Ausführungsform ist es bevorzugt, wenn die ersten Halteeinrichtungen paarig vorgesehen und zwischen ihnen die Öffnung ausgebildet ist. Dadurch werden die Haltbarkeit des Sitzes erhöht und das Heraushebeln aufgrund der Symmetrie vereinfacht.

Die Lagerschale wird vorzugsweise als Blechformteil ausgebildet. Zwischen einem hohlkugelgewölbten Abschnitt zur Aufnahme der Transportkugel mit den Lagerkugeln und dem Umfangsflansch ist ein im wesentlichen radial nach außen verlaufender, scheibenförmiger Abschnitt in der Lagerschale ausgebildet, welcher derart elastisch ist, daß der hohlkugelig gewölbter Abschnitt gegenüber dem Umfangsflansch elastisch bewegbar ist. Dies kann durch eine entsprechende Materialwahl und Dimensionierung erzielt werden. Durch diese Ausbildung der Erfindung ist gewährleistet, daß eine gewisse Elastizität der Lagerung gesichert ist. Auch bei harten Stößen auf die Transportkugel kann somit eine irreversible Verformung der Lagerschale verhindert werden.

Bevorzugte Ausführungsformen der Erfindung ergeben sich aus den Unteransprüchen und der nachfolgenden Beschreibung bevorzugter Ausführungsbeispiele, die anhand von Abbildungen näher erläutert werden. Hierbei zeigen:

| Fig. 1 | eine Haltefläche im perspektivischen Querschnitt; |
| Fig. 2 | eine Haltefläche nach Fig. 1 mit eingebrachter Ausnehmung; |
| Fig. 3 | eine erste bevorzugte Ausführungsform der Fördereinrichtung montiert in einer Haltefläche in Draufsicht; |
| Fig. 4 | Eine Seitenansicht der Fördereinrichtung in Richtung auf die zweite Sicherungseinrichtung; |
| Fig. 5 | einen Querschnitt durch die Haltefläche mit oberer Ausnehmung entsprechend Fig. 2; |
| Fig. 6 | eine Seitenansicht in der Fördereinrichtung gemäß Fig. 3 in Sicht auf die Öffnung; |
| Fig. 7 | einen Teilschnitt entlang der Linie VII-VII aus Fig. 3; |
| Fig. 8 | einen Teilschnitt entlang der Linie VIII-VIII aus Fig. 3; |
| Fig. 9 bis 12 | Ansichten entsprechend denen der Figuren 3 - 5 auf eine zweite Ausführungsform der Erfindung; |
| Fig. 13 | einen Schnitt entlang der Linie XIII-XIII aus Fig. 9, und |
| Fig. 14 | einen Schnitt entlang der Linie XIV-XIV aus Fig. 9. |

In der nachfolgenden Beschreibung werden für gleiche oder gleichwirkende Teile dieselben Bezugsziffern verwendet.

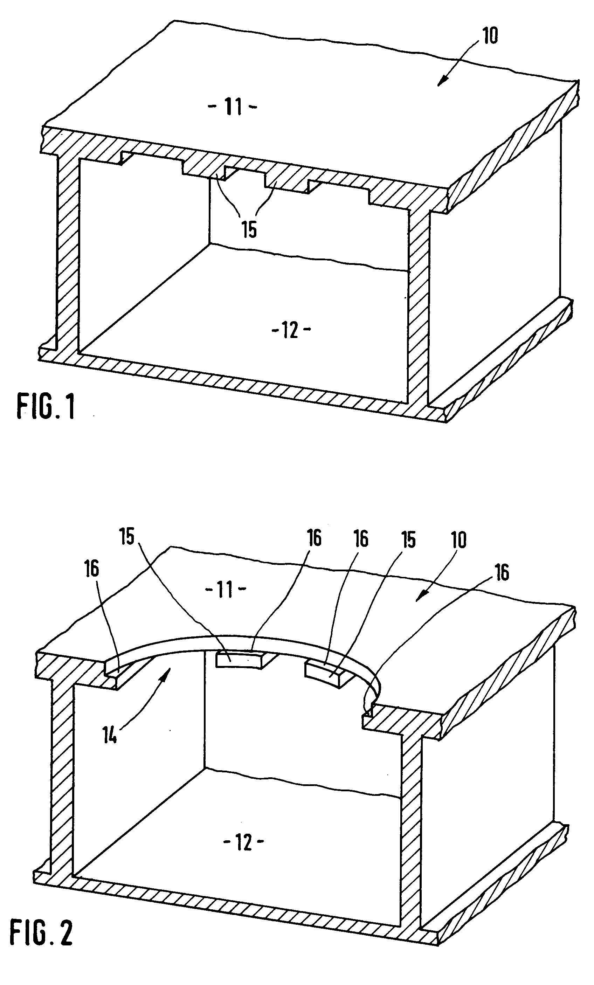

Fig. 1 zeigt den perspektivischen Querschnitt einer Haltefläche, in welche eine Fördereinrichtung der hier interessierenden Art einzusetzen ist. Diese Haltefläche 10 umfaßt eine obere Fläche 11, die mit einer unteren Fläche 12 über vertikale Stege verbunden ist. Das ganze Teil ist als Strangpreßprofil hergestellt. Die obere Fläche 11 weist Verstärkungsrippen 15 auf.

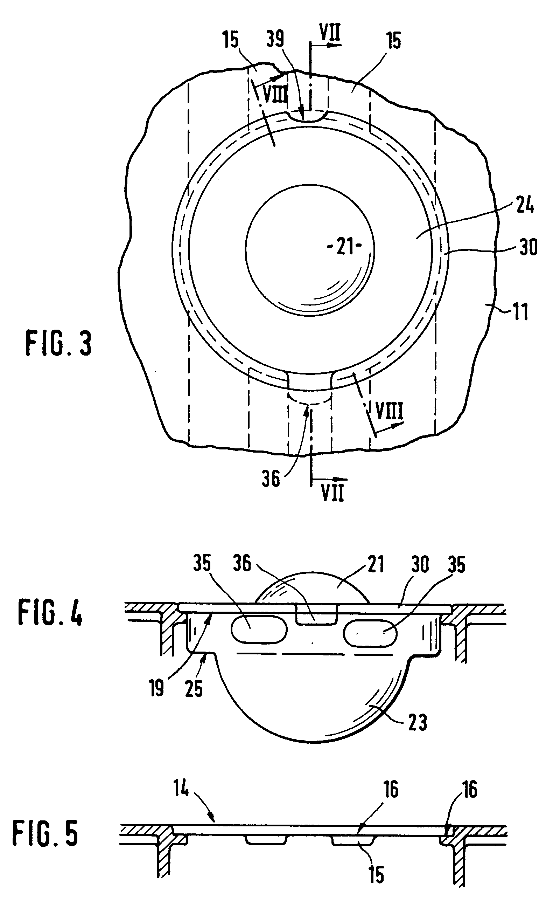

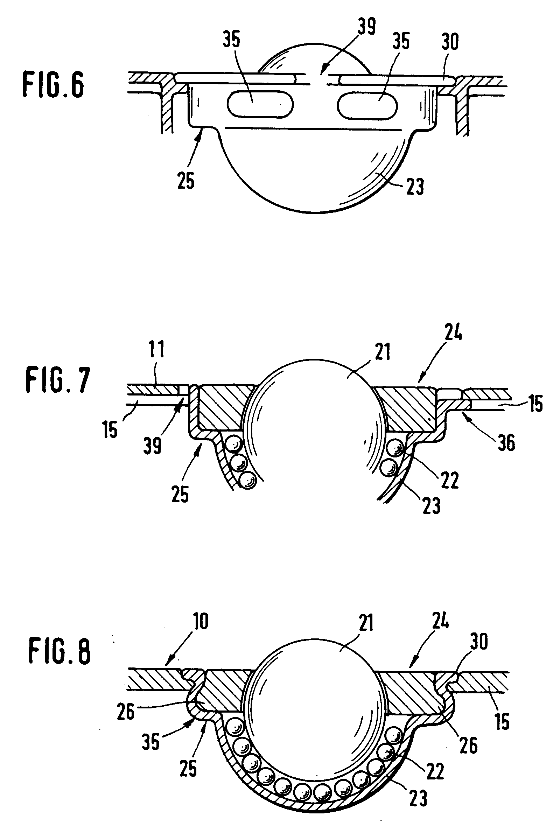

Zum Einbau einer Fördereinrichtung wird zunächst in die obere Fläche 11 ein Loch gebohrt. Darauf wird das Material der oberen Fläche 11 rings um das Loch weiter ausgefräst, so daß die Verstärkungsrippen 15 in die so entstehende obere Ausnehmung 14 hereinragen und auf ihren Oberseiten Sitzflächen 16 bilden. Im folgenden wird anhand der Figuren 3 - 8 eine erste bevorzugte Ausführungsform der Fördereinrichtung erläutert.

Die Fördereinrichtung umfaßt eine Transportkugel 21, welche über eine Vielzahl von Lagerkugeln 22 in einer Lagerschale 23 drehbar gelagert ist. Die Lagerschale 23 geht über einen, im wesentlichen horizontalen ringförmigen Abschnitt 25 und einen Sicherungsabschnitt 35 in einen im wesentlichen horizontalen Schalenrand 30 über. Der Außendurchmesser des horizontalen Schalenrandes 30 entspricht im wesentlichen der Ausfräsung, die - wie vorher beschrieben - rings um die Bohrung in der Oberfläche 11 der Haltefläche 10 zur Bildung der oberen Ausnehmung 14 eingebracht wird.

Die Transportkugel 21 ist in der Lagerschale 23 mittels eines Halterings 24 gehalten. Der Haltering 24 weist eine mittige Ausnehmung auf, welche mindestens in ihrem oberen Abschnitt einen Durchmesser aufweist, der geringer ist, als derjenige der Transportkugel 21.

Der Haltering 24 besteht aus elastischem Material, vorzugsweise aus Kunststoff und weist mehrere, im hier gezeigten Ausführungsbeispiel 4 Vorsprünge 26 auf, die abgerundet ausgebildet sind. In den Bereichen, in welchen die Vorsprünge 26 im Haltering 24 vorgesehen sind, weist die Lagerschale 23 korrespondiert geformte Innenausnehmungen auf, die auf der Außenseite wiederum als Vorsprünge mit abgerundeter Kontur hervorstehen. Diese Vorsprünge bilden die ersten Sicherungseinrichtungen 35. Die Lagerschale 23 ist als Blechformteil aus einem Material geeigneter Dicke und Elastizität derart geformt, daß zum einen bei Einwirkung einer Last auf die Transportkugel 21 der horizontale Abschnitt 25 entsprechend der Last nachgeben kann, so daß die Übertragung sehr harter Stöße von der Transportkugel 21 über die Lagerkugeln 22 auf die Lagerschale 23 vermieden wird. Darüber hinaus können die ersten Sicherungseinrichtungen 35 mit den darunter liegenden Vorsprüngen 26 in radialer Richtung gesehen etwas nachgeben.

In einem, dem Abstand zwischen zwei Verstärkungsrippen 15 entsprechenden Bereich ist der Schalenrand 30 tiefergesetzt, so daß eine Zunge 36 zur Bildung zweiter Sicherungseinrichtungen entsteht. Der Schalenrand 30 ist hierbei soweit nach unten gesetzt, daß die obere Fläche der zweiten Sicherungseinrichtung 36 in im wesentlichen derselben Höhe liegt, wie die untere Fläche des Randes 30, mit welcher dieser auf den Sitzflächen 16 aufliegt. Darüber hinaus steht die zungenförmige zweite Sicherungseinrichtung 36 radial gesehen weiter hervor als der Schalenrand 30 an seinem Umfang. Im eingesetzten Zustand liegt somit die zungenförmige zweite Sicherungseinrichtung 36 - wie in Fig. 3 gezeigt - zwischen zwei Verstärkungsrippen 15 und ragt mit ihrem Ende unter die obere Fläche 11.

Der zweiten Sicherungseinrichtung 36 gegenüberliegend ist der Schalenrand 30 mit einer Öffnung 39 versehen. Auf beiden Seiten der Öffnung 39 liegt jeweils eine der ersten Sicherungseinrichtungen 35. Diese Öffnung 39 dient zum Einsetzen eines Werkzeugs, z. B. der Klinge eines Schraubenziehers, um die Lagerschale aus der Haltefläche 10 herauszuheben.

Beim Einsetzen der Fördereinrichtung geht man so vor, daß man zunächst die gesamte Einrichtung gekippt mit der zweiten Sicherungseinrichtung 36 nach unten derart in die obere Ausnehmung 14 einsetzt, daß die zweite Sicherungseinrichtung 36 zwischen zwei Verstärkungsrippen 15 zu liegen kommt. Daraufhin drückt man den oberen Rand 30 der Fördereinrichtung der zweiten Sicherungseinrichtung 36 gegenüber nach unten. Bei einem kräftigen Druck bzw. bei einem leichten Schlag auf den Schalenrand 30 verformen sich die ersten Sicherungseinrichtungen 35 derart, daß sie unter die obere Fläche 11 schnappen, so daß die Fördereinrichtung nunmehr fest in der Haltefläche 10 sitzt.

Der Haltering 24 ist nunmehr mit erhöhter Stabilität auf der Lagerschale gehalten, da die Ausnehmung, in welcher die Vorsprünge 26 sitzen, durch die Auflage am Rand der oberen Ausnehmung 14 gegenüber einer Verformung versteift ist.

Zum Herausnehmen der Fördereinrichtung wird die Klinge eines Schraubenziehers in die Öffnung 39 eingeführt, so daß die Fördereinrichtung aus der Öffnung herausgehebelt werden kann.

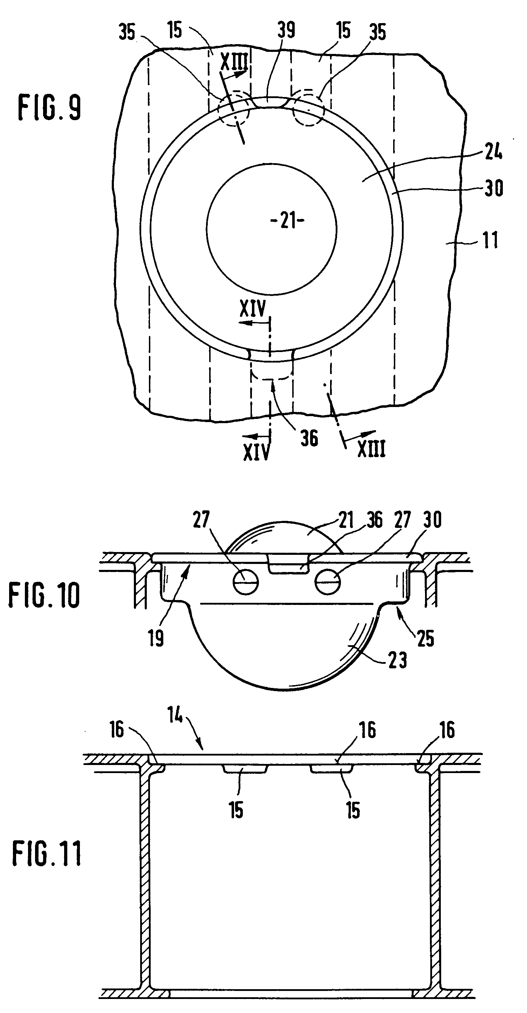

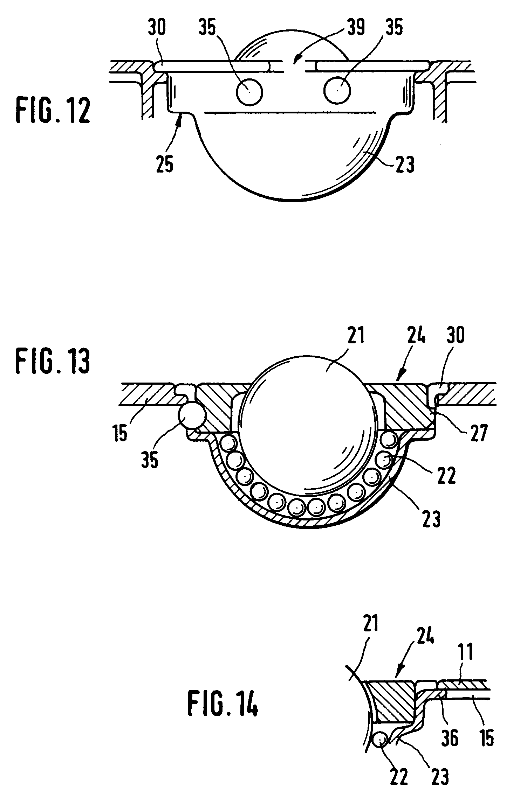

Die gesamte Anordnung umfaßt also nur noch 4 Teile (die Lagerkugeln 22 werden als ein einziges Teil betrachtet), die alle sehr einfach geformt sind. Dadurch sinken die Empfindlichkeit der Anordnung und ihr Preis. Die in den Figuren 9 - 14 gezeigte weitere bevorzugte Ausführungsform der Erfindung unterscheidet sich von der nach den Figuren 3 - 8 durch die Formung der ersten Sicherungseinrichtungen 35. Bei dieser Lösung des Problems sind in dem zwischen dem horizontalen Abschnitt 25 und dem Schalenrand 30 liegenden Abschnitt der Lagerschale 23 Bohrungen vorgesehen. Der Haltering 24 weist im Bereich der Bohrungen auf seiner einen Seite Haken 27 auf, auf seiner anderen Seite Einsenkungen. Die Einsenkungen sind derart geformt, daß als erste Sicherungseinrichtungen 35 Kugeln 35 einsetzbar sind, welche mit einem radial außenliegenden Abschnitt aus der Bohrung in der Lagerschale 23 hervorstehen, auf ihrer anderen Seite in der jeweiligen Ausnehmung des Halterings 24 sitzen. Auf diese Weise ist der Haltering 24 sicher in der Lagerschale 23 gehalten.

Beim Einsetzen der Fördereinrichtung in eine Haltefläche 10 geht man wie oben beschrieben vor. Zunächst wird also die Fördereinrichtung in gekipptem Zustand mit ihrer zungenförmigen zweiten Sicherungseinrichtung 36 zwischen zwei Verstärkungsrippen 15 eingesetzt. Daraufhin kippt man die Fördereinrichtung nach unten, bis die kugelförmige ersten Sicherungseinrichtung 35 auf der Sitzfläche 16 aufsitzt. Bei weiterem Druck bzw. bei einem leichten Schlag auf den Schalenrand 30 wird die kugelförmige erste Sicherungseinrichtung 35 unter elastischer Verformung des Halterings 24 in diesem Abschnitt nach innen gedrückt und schnappt unter die untere Fläche der Verstärkungsrippe 15. In diesem Zustand ist die Fördereinrichtung sicher in der Haltefläche 10 gehalten. Der Haltering 24 sitzt in dieser Einbauposition ebenfalls sehr fest, da die kugelförmige erste Sicherungseinrichtung 35 durch ihren Schnappsitz unter der Verstärkungsrippe 15 fest auf den Haltering 24 gedrückt wird. Auch diese Anordnung ist also sehr einfach geformt und besteht aus wenigen, kostengünstigen Teilen. Da das Einsetzen und das Herausnehmen der Fördereinrichtung aus der Haltefläche 10 genauso wie bei der zuvor beschriebenen Ausführungsform geschehen, weist die hier gezeigte Ausführungsform dieselben Vorteile wie die zuvor beschriebene Ausführungsform auf.

Beim hier gezeigten Beispiel gemäß Fig. 3 - 8 sind zwei Paare von ersten Sicherungseinrichtungen 35 und zwei Paare von Vorsprüngen 26 gezeigt. Selbstverständlich ist es möglich, auch eine andere Zahl zu verwenden. Von Vorteil ist jedoch die symmetrische Anbringungsweise, insbesondere bezüglich der Öffnung 39 und relativ (diametral gegenüber) zur zweiten Sicherungseinrichtung 36. Ähnliches gilt selbstverständlich auch in bezug auf das Ausführungsbeispiel gemäß den Figuren 9 - 14.

Bezugszeichenliste

| 10 | Haltefläche |
|----|-------------|
| 11 | Obere Fläche |
| 12 | Untere Fläche |
| 14 | Obere Ausnehmung |
| 15 | Verstärkungsrippe |
| 16 | Sitzfläche |
| 21 | Transportkugel |
| 22 | Lagerkugel |
| 23 | Lagerschale |
| 24 | Haltering |
| 25 | Horizontaler Abschnitt |

26 Vorsprung
27 Haken
30 Schalenrand
35 Erste Sicherungseinrichtung
36 Zweite Sicherungseinrichtung
39 Öffnung

**Patentansprüche**

1. Fördereinrichtung mit einer Transportkugel (21), die über Lagerkugeln (22) in einer Lagerschale (23) gelagert ist, mit einem Haltering (24) zum Halten der Transportkugel (21) auf den Lagerkugeln (22), der in der Lagerschale (23) sitzt, wobei die Lagerschale (23) in eine Ausnehmung (14) einer Haltefläche (10) einsetzbar, auch dieser mittels eines Schalenrandes (30) abstützbar und mittels elastischer erster Sicherungseinrichtung (35) an dieser befestigbar ist,
**dadurch gekennzeichnet, daß**
die Lagerschale (23) mindestens einen elastisch verformbaren Vorsprung zur Bildung der ersten Sicherungseinrichtungen (35) umfaßt, der gleichzeitig eine radiale Ausnehmung im Inneren der Lagerschale (23) bildet, in welche ein Haltevorsprung (26 ) des Halteringes (24) zu dessen Fixierung im Inneren der Lagerschale (23) einsetzbar ist.

2. Fördereinrichtung mit einer Transportkugel (21), die über Lagerkugeln (22) in einer Lagerschale (23) gelagert ist, mit einem Haltering (24) zum Halten der Transportkugel (21) auf den Lagerkugeln (22), der in der Lagerschale (23) sitzt, wobei die Lagerschale (23) in eine Ausnehmung (14) einer Haltefläche (10) einsetzbar, auf dieser mittels eines Schalenrandes (30) abstützbar und mittels elastischer erster Sicherungseinrichtungen (35) an dieser befestigbar ist,
dadurch gekennzeichnet, daß
die Lagerschale (23) eine Öffnung aufweist, in welche ein Verschlußstück (35) derart einsetzbar ist, daß es mit seinem einen Ende über die Außenfläche der Lagerschale (23) zur Bildung der ersten Sicherungseinrichtungen hervorsteht und mit seinem anderen Ende in eine radiale Ausnehmung im Haltering (24) zu dessen Fixierung im Inneren der Lagerschale (23) ragt.

3. Fördereinrichtung nach Anspruch 2,
dadurch gekennzeichnet,
daß das Verschlußstück (35) kugelförmig ausgebildet ist.

4. Fördereinrichtung nach einem der vorhergehenden Ansprüche,
dadurch gekennzeichnet,
daß die ersten Sicherungseinrichtungen (35) derart geformt sind, daß die Lagerschale (23) kraftschlüssig, ohne gesonderte Bewegung eines Riegels oder dergleichen in die Ausnehmung (14) einschnappbar und unter Lösen des Schnappsitzes herausnehmbar ist.

5. Fördereinrichtung nach einem der vorhergehenden Ansprüche,
dadurch gekennzeichnet,
daß den ersten Sicherungseinrichtungen (35) diametral zur Transportkugel (21) gegenüberliegend, unelastische zweite Sicherungseinrichtungen (36) an der Lagerschale (23) ausgebildet sind.

6. Fördereinrichtung nach einem der vorhergehenden Ansprüche,
dadurch gekennzeichnet,
daß neben den ersten Sicherungseinrichtungen (35) eine Öffnung (39) im Schalenrand (30) vorgesehen ist, in welche ein Werkzeug zum Heraushebeln der Fördereinrichtung aus der Ausnehmung (14) der Haltefläche (10) einführbar ist.

7. Fördereinrichtung nach Anspruch 6,
dadurch gekennzeichnet,
daß die ersten Sicherungseinrichtungen (35) paarig vorgesehen und zwischen ihnen die Öffnung (39) ausgebildet ist.

8. Fördereinrichtung nach einem der vorhergehenden Ansprüche,
dadurch gekennzeichnet,
daß die Lagerschale (23) als Blechformteil ausgebildet ist und zwischen einem hohlkugelig gewölbten Abschnitt zur Aufnahme der Transportkugel (21) und dem Schalenrand (30) einen im wesentlichen radial nach außen verlaufenden scheibenringförmigen Abschnitt (25) aufweist, welcher derart elastisch ausgebildet ist, daß der hohlkugelig gewölbte Abschnitt gegenüber dem Schalenrand (30) elastisch bewegbar ist.

FIG.1

FIG.2

FIG. 3

FIG. 4

FIG. 5

FIG.6

FIG.7

FIG.8

**FIG.9**

**FIG.10**

**FIG.11**

FIG.12

FIG.13

FIG.14

Europäisches
Patentamt

**EUROPÄISCHER RECHERCHENBERICHT**

Nummer der Anmeldung

EP    92 10 6793

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| D,A | DE-A-3 927 560 (BAVARIA CARGO TECHNOLOGIE) <br> * Zusammenfassung; Abbildungen 1-8 * <br> --- | 1,2,4,6 | B65G39/09 <br> F16C29/00 <br> B60B33/08 |
| D,A | DE-C-3 507 945 (ELECTRO-PNEUMATIC-INTERNATIONAL) <br> * Spalte 9, Zeile 35 - Zeile 66; Abbildung 2 * <br> --- | 1,2,4,8 | |
| A | EP-A-0 162 484 (BOEING) <br> * Seite 15, Zeile 28 - Seite 16, Zeile 5; Abbildung 2 * <br> --- | 1,2,4,8 | |
| A | EP-A-0 329 816 (BAVARIA CARGO TECHNOLOGIE) <br> * Spalte 5, Zeile 44 - Zeile 50; Abbildungen 1,2 * <br> --- | 1,4,6,8 | |
| D,A | DE-U-8 915 491 (ELECTRO-PNEUMATIC-INTERNATIONAL) <br> * Anspruch 1; Abbildungen * <br> --- | 2,3,6 | |
| A | FR-A-2 130 277 (WESTERN GEAR CORPORATION) <br> * Anspruch 1; Abbildungen 3,5 * | 2,4-6,8 | |

RECHERCHIERTE SACHGEBIETE (Int. Cl.5)

B65G
F16C
B60B

Der vorliegende Recherchenbericht wurde für alle Patentansprüche erstellt

| Recherchenort | Abschlußdatum der Recherche | Prüfer |
|---|---|---|
| DEN HAAG | 21 AUGUST 1992 | NEVILLE D.J. |